# FASCICULE DE BREVET EUROPEEN

(11) **EP 1 149 459 B1**
(45) Date de publication et mention de la délivrance du brevet: **17.09.2003**
(21) Numéro de dépôt: 00902708.7
(22) Date de dépôt: 04.02.2000
(51) Int. Cl.: H02K 9/22, H02K 9/08, H02K 5/10

(54) **PERFECTIONNEMENTS AUX MOTEURS ELECTRIQUES A COURANT CONTINU, NOTAMMENT POUR ACTIONNEUR DE VEHICULE AUTOMOBILE**
VERBESSERUNGEN AN GLEICHSTROMMOTOREN, INSBESONDERE FÜR FAHRZEUGVERSTELLANTRIEBE
IMPROVEMENTS TO DIRECT CURRENT ELECTRIC MOTORS, IN PARTICULAR FOR MOTOR VEHICLE ACTUATORS

(30) Priorité: 05.02.1999 FR 9901358
(43) Date de publication de la demande: 31.10.2001
(73) Titulaire: VALEO SYSTEMES D'ESSUYAGE, 78321 La Verrière (FR)
(72) Inventeur: DELEVALLEE, Jean-Louis, F-86220 Oyre (FR)
(86) Numéro de dépôt international: FR0000269
(87) Numéro de publication internationale: WO00046901

(56) Documents cités:
- EP-A- 0 831 012
- DE-A- 2 237 603
- FR-A- 2 432 790
- US-A- 5 514 922
- US-A- 5 757 095

## Description

La présente invention est relative aux moteurs électriques et notamment aux moteurs électriques utilisés dans les actionneurs de véhicules automobiles.

L'invention trouve avantageusement application pour les moteurs électriques fermés dissipant de l'énergie calorifique, tels que les moteurs d'essuyage, de commande d'embrayage, de lève-vitres de véhicules automobiles, les moteurs électriques de commande de toits ouvrants ou de sièges. L'invention s'applique aux moteurs électriques de type synchrone, asynchrone ou autres.

Classiquement, le stator d'un moteur électrique à courant continu comporte une carcasse en acier qui sert au support des aimants, qui assure l'étanchéité du moteur, qui permet de refermer le flux magnétique et assure une bonne évacuation des calories générées dans l'inducteur par conduction, convection et rayonnement.

Pour certaines applications, il est souhaitable de disposer de moteurs électriques très compacts, permettant des vitesses de rotation élevées et transmettant des couples moteurs importants, notamment pour l'essuyage et-la commande de l'embrayage d'un véhicule.

Pour ce faire, on connaît, notamment par le document FR-2.432.790, des structures de moteurs électriques dans lesquels la carcasse du stator est en matériau non magnétisable, tel que le "zamac", et porte un élément annulaire en fer doux qui permet au flux du champ magnétique de se refermer.

Cette carcasse est constituée de deux demi boîtiers refermés l'un sur l'autre selon un plan de contact qui passe par l'axe du moteur. Ces demi-boîtiers présentent des ouvertures dans lesquelles sont notamment reçus les aimants du stator, de sorte que ladite carcasse n'est aucunement étanche et que le moteur est bien ventilé.

Un problème technique rencontré lorsque l'on cherche à réaliser des moteurs électriques compacts et étanches à l'eau et à la poussière est celui de l'évacuation des calories dissipées par l'induit car, lorsqu'on cherche à diminuer la taille du moteur, il faut augmenter sa vitesse de rotation pour transmettre un couple moteur équivalent, ce qui entraîne une augmentation de la chaleur à dégager.

Le but de l'invention est de résoudre ce problème de manière simple et économique en améliorant les échanges thermiques.

L'invention propose quant à elle un moteur électrique, notamment pour actionneur de véhicule automobile, comprenant un rotor doté d'un bobinage présentant une première et une deuxième extrémités axiales et monté rotatif dans une carcasse creuse qui comporte deux parties creuses rapportées l'une sur l'autre et présentant des parois d'extrémité, ces deux parties étant en un matériau bon conducteur de chaleur et ladite carcasse portant des moyens d'induction, caractérisé en ce que ladite carcasse est étanche, en ce que les deux parties sont deux pièces jointes transversalement l'une sur l'autre, et en ce que la paroi d'extrémité de chaque partie est continûment adjacente à l'une desdites première et deuxième extrémité du bobinage.

Dans ces conditions, le rayonnement et la convection thermique des extrémités du bobinage du rotor sont transmis directement aux parois d'extrémité et évacués de manière optimisée.

En outre, le plan de joint ou d'assemblage des deux pièces est implanté hors des paliers supportant l'axe du moteur de sorte que ces paliers sont ménagés. De plus, les deux pièces ne sont pas nécessairement analogues, par exemple l'une de ces pièces pouvant présenter une profondeur sensiblement supérieure à l'autre. Par ailleurs, le plan d'assemblage des deux pièces peut être une simple collerette présentant une grande robustesse.

Grâce au montage transversale des pièces de la carcasse, l'accès directe aux partiies constitutives du moteur est facilité par démontage d'une des pièces de la carcasse.

Un tel moteur est avantageusement complété par les différentes caractéristiques suivantes prises seules ou selon toutes leurs combinaisons possibles:
- les parois d'extrémité enveloppent au plus près la forme des chignons, constitués par les extrémités du bobinage, pour favoriser encore les échanges thermiques ;
- les surfaces intérieures des parois d'extrémité des deux pièces de la carcasse sont conformées centralement avec une forme de cuvette qui limite les extrémités du bobinage du rotor qui sont adjacentes auxdites parois ;
- le matériau conducteur thermique est amagnétique et choisi avantageusement dans le groupe comportant le "zamac", l'aluminium, le magnésium, pour réduire le poids du moteur et faciliter sa fabrication par moulage;
- en variante, le matériau est magnétique ou magnétisable, tel que de l'acier ;
- l'une des deux pièces de la carcasse est d'une pièce avec au moins une partie du carter de l'actionneur auquel ledit moteur correspond ;
- l'une au moins des deux pièces de la carcasse comporte une paroi d'extrémité et une portion d'orientation axiale qui comporte extérieurement des éléments qui contribuent à augmenter les échanges thermiques avec l'air ambiant
- au moins l'une des deux pièces de la carcasse porte des ailettes de refroidissement ;
- l'une au moins des deux pièces de la carcasse porte des pattes de fixation qui facilitent les échanges thermiques par conduction et le démontage de la pièce dépourvue de pattes de fixation ;
- l'une et l'autre des deux pièces de la carcasse comportent une paroi d'extrémité et une partie circonférentielle ;
- les deux pièces sont en matériaux différents.

D'autres avantages de l'invention ressortiront encore de la description qui suit. Cette description est purement illustrative et non limitative. Elle doit être lue en regard des dessins annexés sur lesquels :
- la figure 1 est une vue en coupe schématique illustrant un mode de réalisation de l'invention ;
- la figure 2 est une vue en coupe schématique illustrant un autre mode de réalisation de l'invention ;
- la figure 3 est une vue en perspective du mode de réalisation de la figure 2 ;
- la figure 4 est une vue en coupe schématique illustrant un autre mode de réalisation de l'invention ;
- la figure 5 est une vue en perspective du mode de réalisation de la figure 4.

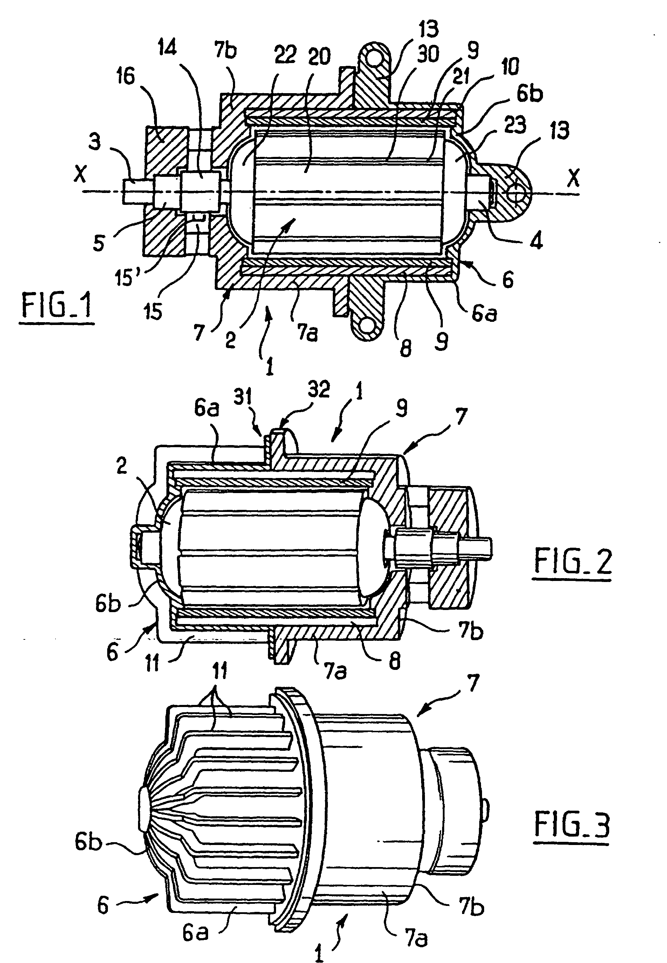

Le moteur électrique qui est représenté sur la figure 1 est un moteur électrique fermé à courant continu, qui comporte une carcasse creuse 1, ainsi qu'un rotor bobiné 2 porté par un arbre 3 monté rotatif entre deux paliers 4, 5 montés dans la carcasse 1, constitués par des roulements à billes dans ce mode de réalisation. L'arbre 3 porte entre ces deux roulements 4, 5 un paquet de tôles accolées 20, présentant chacune des encoches globalement en forme de V pour constituer des rainures axiales 30. Ces rainures sont destinées à enrouler sur plusieurs tours le fils conducteur, ici en cuivre, pour former un bobinage 21. Ce bobinage présente alors axialement, en saillie par rapport au paquet 20, et à chacune de ses extrémités, une première et une deuxième extrémités, 22 et 23, en forme de chignons.

La carcasse 1 est une carcasse fermée qui est étanche à l'eau et à la poussière. Elle est constituée de deux pièces 6, 7 qui sont rapportées axialement l'une sur l'autre, leur plan de contact et d'assemblage étant sensiblement perpendiculaire à l'axe de rotation X-X de l'arbre 3.

Ces deux pièces 6, 7 sont deux pièces creuses moulées en un matériau amagnétique léger dans ce mode de réalisation, et présentant une bonne conduction thermique, tel que l'aluminium, le magnésium, le "zamac", etc. En variante, ces pièces creuses sont en acier usiné ou autre matériau magnétique ou magnétisable et bon conducteur de chaleur.

Elles présentent chacune une portion annulaire d'orientation axiale 6a, 7a dont la surface intérieure est de forme générale cylindrique, et un fond 6b, 7b, d'orientation globalement transversale, qui termine cette portion 6a, 7a à une extrémité. Le fond 6b reçoit le palier 4 qui constitue le palier arrière; le fond 7b est traversé par l'arbre 3 et est prolongé par une avancée 16 qui reçoit le palier avant 5, ainsi que le collecteur 14 du moteur. Il présente également des logements 15 pour les charbons 15'.

La carcasse 1 porte un inducteur à anneau 8 et aimants 9. Pour ce faire, elle reçoit en son intérieur un anneau tubulaire 8, qui est quant à lui en un matériau magnétique ou magnétisable, par exemple en fer doux.

Elle reçoit également des aimants permanents 9 qui sont disposés à l'intérieur dudit tube 8 et dont le champ magnétique se referme sur ledit tube 8. Un faible entrefer est prévu entre le paquet de tôles 20 et les aimants, ce qui permet d'augmenter les performances du moteur.

Le tube 8 et les aimants 9 sont maintenus en place par encastrement dans la carcasse par l'intermédiaire d'évidements intérieurs 10 que présentent les fonds 6b, 7b et dans lesquels les bords dudit tube 8 et des aimants 9 sont reçus. Cet encastrement permet par coopération de formes de s'affranchir des ressorts habituellement prévus pour assembler les aimants au tube. De plus, le remplacement de ces ressorts par de la matière conductrice de chaleur entre les évidements 10 permet d'évacuer plus efficacement les calories car les enroulements du fils conducteur dans les rainures 30 sont adjacents à cette matière qui s'étend avantageusement axialement d'un fond 6b à l'autre 7b.

Les fonds 6b, 7b, constituant transversalement chacun une paroi d'extrémité pour la pièce 6, 7 respectivement concernée, présentent en outre une forme intérieure en cuvette qui enveloppe les extrémités axiales 22, 23 du bobinage 21 du rotor 2. Ces extrémités 21, 22 sont selon l'invention, continûment adjacentes auxdits fonds 6b, 7b, ce qui permet de minimiser l'espace entre ces fonds 6b, 7b et les extrémités 22, 23. En conséquence, l'énergie rayonnée par les extrémités 22, 23 est transmise par toute la carcasse et évacuée de manière optimisée.

Comme on l'aura compris, la structure qui vient d'être décrite permet d'utiliser des matériaux bons conducteurs de chaleur pour réaliser une carcasse étanche, en particulier à l'eau et aux poussières, d'un moteur électrique compact.

En outre, les fonds 6b, 7b de la carcasse, constituant parois d'extrémité, ont centralement une forme de cuvette pour recevoir de manière complémentaire les chignons 22, 23 du bobinage 21. Cette disposition minimise la distance entre le bobinage et la carcasse 1, ce qui permet d'optimiser le refroidissement de l'induit par ladite carcasse 1.

On notera également que le "zamac", l'aluminium ou le magnésium permette un gain de masse.

En outre, la structure décrite permet de mouler l'une des deux pièces 6, 7 qui constituent la carcasse 1 - et en particulier celle qui définit le palier avant du moteur - de façon à ce qu'elle soit d'une pièce avec au moins une partie du carter 16 de l'actionneur auquel ledit moteur est associé. De plus, la pièce qui est monobloc avec au moins une partie du carter peut être en matière différente, de nature magnétique semblable ou différente par rapport à l'autre pièce.

Il en résulte une simplification de montage, ainsi qu'une augmentation du volume de la carcasse 1 qui contribue à augmenter les échanges thermiques avec l'air ambiant.

Dans l'exemple illustré sur la figure 1, la pièce 6 présente une pluralité de pattes de fixation 13 qui, outre leur fonction mécanique, permettent également d'augmenter le volume de la carcasse 1 et donc les échanges thermiques par convection et rayonnement avec l'air ambiant et par conduction avec le support sur lequel les pattes sont fixées. De plus, le fait que les pattes de fixation sont disposées au droit du paquet de tôles 20 permet de diminuer les portes à faux et donc d'améliorer le maintien du rotor 2.

En variante ou en complément, il peut également être prévu que l'une au moins des deux pièces 6 et 7 porte des ailettes de refroidissement.

C'est ce qu'illustrent les figures 2 et 3, sur lesquelles on a représenté une variante de réalisation dans laquelle la partie circonférentielle 6a de la pièce 6 comporte une pluralité d'ailettes de refroidissement 11 qui s'étendent le long de génératrices de ladite partie 6a, chacune dans un plan diamétral de ladite pièce 6. Sur la figure 2 plus particulièrement, il apparaît que les pièces 6 et 7 sont jointes à l'aide de collerettes 31, 32 dont une 32 est interrompue par les pattes de fixation 13. Les collerettes sont assemblées ensemble à l'aide d'organes de fixation, tels que vis, rivets ou autres connus de l'homme du métier.

D'autres variantes de réalisation de l'invention sont bien entendu possibles. Par exemple, les deux pièces de la carcasse portent des pattes de fixation et des ailettes de refroidissement. Chaque pièce peut comporter au moins une patte de fixation interrompant la collerette correspondante.

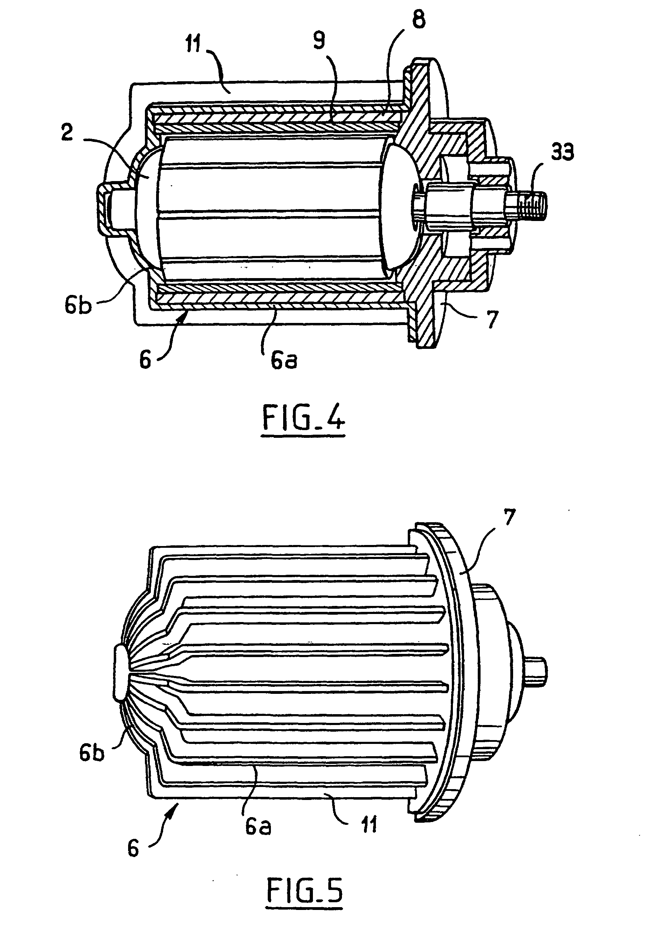

Ces deux pièces peuvent présenter des profondeurs différents en fonction des applications visées. En particulier, ainsi qu'illustrée sur les figures 4 et 5, la pièce 7 peut être constituée par une simple plaque de fermeture sur laquelle vient se rapporter la partie creuse 6.

Egalement, la platine porte charbons (non représentée sur les figures 1 à 5) peut être disposée à l'intérieur de la carcasse 1 sur le fond 7b de la pièce 7. Les calories dégagées par ladite platine sont alors directement évacuées par ladite pièce 7.

L'arbre 3 présente une extrémité adaptée pour permettre de constituer l'élément d'entrée de l'actionneur. Par exemple, comme illustré de manière schématique sur la figure 4, l'arbre 3 présente une partie d'extrémité filetée 33 pour entraîner un écrou ou une roue appartenant à un dispositif d'engrenage, tel que décrit dans les documents EP 0 740 401 et EP 0 867 629.

Par ailleurs, pour obtenir des échanges thermiques encore plus efficaces entre l'induit et le reste du moteur, en particulier lorsque le fils conducteur est de plus gros diamètre pour que le moteur puisse fournir un plus grand couple moteur, il est avantageux que les enroulements et les chignons soient au plus près de la carcasse. Pour ce faire, sans déstandardiser les encoches du paquet de tôle, les fonds d'encoches sont remplis d'une matière plastique, ou de toute autre matière électriquement et thermiquement isolante, pour que les enroulements de fils occupent toute la place dans le haut des rainures et rayonnent ainsi vers la carcasse et/ou l'anneau. En variante, il est également possible de réaliser des encoches spécifiques moins profondes.

## Revendications

1. Moteur électrique, notamment pour actionneur de véhicule automobile, comprenant un rotor (2) doté d'un bobinage (21), présentant une première (22) et une deuxième extrémités axiales (23), et monté rotatif dans une carcasse creuse (1) qui comporte deux parties (6, 7) rapportées l'une sur l'autre et présentant des parois d'extrémité (6b, 7b), ces deux parties étant en un matériau bon conducteur de chaleur et ladite carcasse portant des moyens d'induction (8, 9), **caractérisé en ce que** ladite carcasse (1) est étanche, **en ce que** les deux parties sont deux pièces (6, 7) jointes transversalement l'une sur l'autre, et **en ce que** la paroi d'extrémité (6b, 7b) de chaque partie est continûment adjacente à l'une desdites première et deuxième extrémité (22, 23) du bobinage (21).

2. Moteur selon la revendication 1, **caractérisé en ce que** les parois d'extrémité (6b, 7b) enveloppent au plus près les extrémités du bobinage (21) en forme de chignons.

3. Moteur selon la revendication 2, **caractérisé en ce que** les parois d'extrémité (6b, 7b) des deux pièces (6, 7) sont centralement en forme de cuvette.

4. Moteur selon l'une des revendications précédentes, **caractérisé en ce que** le matériau est amagnétique et choisi dans le groupe comportant le "zamac", l'aluminium, le magnésium.

5. Moteur selon l'une des revendications 1 à 3, **caractérisé en ce que** le matériau est magnétique ou magnétisable, tel que de l'acier.

6. Moteur selon l'une des revendications précédentes, **caractérisé en ce que** l'une (7) des deux pièces de la carcasse (1) est monobloc avec au moins une partie d'une pièce du carter de l'actionneur auquel ledit moteur correspond.

7. Moteur selon l'une des revendications précédentes, **caractérisé en ce que** l'une (6) au moins des deux pièces (6, 7) de la carcasse (1) comporte une paroi d'extrémité (6b) et une portion d'orientation axiale (6a) qui comporte extérieurement des éléments (11, 13) qui contribuent à augmenter les échanges thermiques avec l'air ambiant

8. Moteur selon la revendication 7, **caractérisé en ce que** la portion d'orientation axiale (6a) porte des ailettes de refroidissement (11).

9. Moteur selon l'une des revendications 6 et 7, **caractérisé en ce que** ladite portion (6a) porte des pattes de fixation (13).

10. Moteur selon l'une des revendications précédentes, **caractérisé en ce que** l'une et l'autre des deux pièces (6, 7) de la carcasse (1) comportent une paroi d'extrémité (6b, 7b) et une portion d'orientation axiale (6a, 7a).

11. Moteur selon l'une quelconque des revendications précédentes, **caractérisé en ce que** chaque pièce (6, 7) présente une collerette d'assemblage des pièces entre elles.

12. Moteur selon la revendication 11 prise en combinaison avec la revendication 9, **caractérisé en ce qu'**au moins l'une des collerettes est interrompue par au moins une patte de fixation (13).

13. Moteur selon l'une des revendications 1 à 12, **caractérisé en ce que** l'une (7) des deux pièces de la carcasse (1) est une plaque de fermeture sur laquelle l'autre pièce est rapportée.

14. Moteur selon l'une des revendications précédentes, **caractérisé en ce qu'**il comporte une platine porte charbons disposée à l'intérieur de la carcasse sur la paroi d'extrémité de l'une des deux pièces.

15. Moteur selon l'une quelconque des revendications précédentes, **caractérisé en ce que** les deux pièces sont en matériaux différents.

## Patentansprüche

1. Elektromotor, insbesondere für Betätigungsgeräte eines Kraftfahrzeugs, mit einem Rotor (2) mit einer Wicklung (21), die ein erstes (22) und ein zweites axiales Ende (23) aufweist und drehbar in einem hohlen Gehäuse (1) montiert ist, das zwei zusammengesetzte Teile (6, 7) umfasst und Endwände (6b, 7b) aufweist, wobei diese beiden Teile aus einem gut Wärme leitenden Material bestehen, und wobei das besagte Gehäuse Induktionsmittel (8, 9) trägt, **dadurch gekennzeichnet, dass** das besagte Gehäuse (1) dicht ist, **dass** die beiden Teile zwei in Querrichtung zusammengesetzte Teile (6, 7) sind, und **dass** die Endwand (6b, 7b) eines jeden Teils durchgehend an eines der besagten ersten und zweiten Enden (22, 23) der Wicklung (21) angrenzt.

2. Motor nach Anspruch 1, **dadurch gekennzeichnet, dass** die Endwände (6b, 7b) die von den Enden der Wicklung (21) gebildete Knotenform so nahe wie möglich umhüllen.

3. Motor nach Anspruch 2, **dadurch gekennzeichnet, dass** die Endwände (6b, 7b) der beiden Teile (6, 7) in der Mitte in Form einer Schale ausgebildet sind.

4. Motor nach einem der vorangehenden Ansprüche, **dadurch gekennzeichnet, dass** das Material unmagnetisch ist und in der Gruppe gewählt wird, die "Zamak", Aluminium, Magnesium umfasst.

5. Motor nach einem der Ansprüche 1 bis 3, **dadurch gekennzeichnet, dass** das Material magnetisch oder magnetisierbar ist, wie beispielsweise Stahl.

6. Motor nach einem der vorangehenden Ansprüche, **dadurch gekennzeichnet, dass** eines (7) der beiden Teile des Gehäuses (1) einstückig mit mindestens einem Teil des Gehäuses des Betätigungsgeräts, für das der Motor bestimmt ist, ausgebildet ist.

7. Motor nach einem der vorangehenden Ansprüche, **dadurch gekennzeichnet, dass** mindestens eines (6) der beiden Teile (6, 7) des Gehäuses (1) eine Endwand (6b) und einen axial ausgerichteten Abschnitt (6a) umfasst, der an seinem Äußeren Elemente (11, 13) aufweist, die dazu beitragen, die Wärmeaustausche mit der Umgebungsluft zu vergrößern.

8. Motor nach Anspruch 7, **dadurch gekennzeichnet, dass** der axial ausgerichtete Abschnitt (6a) Kühlrippen (11) trägt.

9. Motor nach einem der Ansprüche 6 und 7, **dadurch gekennzeichnet, dass** der besagte Abschnitt (6a) Befestigungslaschen (13) trägt.

10. Motor nach einem der vorangehenden Ansprüche, **dadurch gekennzeichnet, dass** beide Teile (6, 7) des Gehäuses (1) eine Endwand (6b, 7b) und einen axial ausgerichteten Abschnitt (6a, 7a) aufweisen.

11. Motor nach einem der vorangehenden Ansprüche, **dadurch gekennzeichnet, dass** jedes Teil (6, 7) einen Montageflansch der Teile miteinander aufweist.

12. Motor nach Anspruch 11 in Kombination mit Anspruch 9, **dadurch gekennzeichnet, dass** mindestens einer der Flansche von mindestens einer Befestigungslasche (13) unterbrochen wird.

13. Motor nach einem der Ansprüche 1 bis 12, **dadurch gekennzeichnet, dass** eines (7) der beiden Teile des Gehäuses (1) eine Verschlussplatte ist, auf die das andere Teil aufgesetzt ist.

14. Motor nach einem der vorangehenden Ansprüche, **dadurch gekennzeichnet, dass** er eine Kohlentragplatine umfasst, die innerhalb des Gehäuses an der Endwand eines der beiden Teile angeordnet ist.

15. Motor nach einem der vorangehenden Ansprüche, **dadurch gekennzeichnet, dass** die beiden Teile aus unterschiedlichen Materialien bestehen.

## Claims

1. An electric motor, in particular for a motor vehicle actuator, comprising a rotor (2) provided with a winding (21) having first (22) and second (23) axial ends and mounted so as to rotate in a hollow casing (1) which comprises two hollow parts (6, 7) attached to each other and having end walls (6b, 7b), these two parts being made from a material which is a good conductor of heat and the said casing carrying induction means (8, 9), **characterised in that** the said casing (1) is sealed, **in that** the two parts are two pieces (6, 7) joined transversely against each other, and **in that** the end wall (6b, 7b) of each part is continuously adjacent to one of the said first and second ends (22, 23) of the winding (21).

2. A motor according to Claim 1, **characterised in that** the end walls (6b, 7b) enclose as closely as possible the ends of the winding (21) in the form of leading-out wires.

3. A motor according to Claim 2, **characterised in that** the end walls (6b, 7b) of the two pieces (6, 7) are centrally in the form of a bowl.

4. A motor according to one of the preceding claims, **characterised in that** the material is nonmagnetic and chosen from the group comprising "Zamac", aluminium and magnesium.

5. A motor according to one of Claims 1 to 3, **characterised in that** the material is magnetic or magnetisable, such as steel.

6. A motor according to one of the preceding claims, **characterised in that** one (7) of the two pieces of the casing (1) is in a single piece with at least part of a piece of the housing of the actuator to which the said motor corresponds.

7. A motor according to one of the preceding claims, **characterised in that** at least one (6) of the two pieces (6, 7) of the casing (1) comprises an end wall (6b) and an axially oriented portion (6a) which externally comprises elements (11, 13) which help to increase the heat exchanges with the ambient air.

8. A motor according to Claim 7, **characterised in that** the axially oriented portion (6a) carries cooling fins (11).

9. A motor according to one of Claims 6 and 7, **characterised in that** the said portion (6a) carries fixing lugs (13).

10. A motor according to one of the preceding claims, **characterised in that** each of the two pieces (6, 7) of the casing (1) comprises an end wall (6b, 7b) and an axially oriented portion (6a, 7a).

11. A motor according to any one of the preceding claims, **characterised in that** each piece (6, 7) has a collar for connecting the pieces together.

12. A motor according to Claim 11 taken in combination with Claim 9, **characterised in that** at least one of the collars is interrupted by at least one fixing lug (13).

13. A motor according to one of Claims 1 to 12, **characterised in that** one (7) of the two pieces of the casing (1) is a closure plate to which the other piece is attached.

14. A motor according to one of the preceding claims, **characterised in that** it comprises a brush-holder plate disposed inside the casing on the end wall of one of the two pieces.

15. A motor according to any one of the preceding claims, **characterised in that** the two pieces are made from different materials.
